# EUROPEAN PATENT SPECIFICATION

(11) **EP 2 933 994 B1**
(45) Date of publication and mention of the grant of the patent: **03.06.2020**
(21) Application number: 15163666.9
(22) Date of filing: 15.04.2015
(51) Int. Cl.: H04N 1/60

(54) **COLOR ADJUSTMENT METHOD**
FARBANPASSUNGSVERFAHREN
PROCÉDÉ DE RÉGLAGE DE COULEUR

(30) Priority: 15.04.2014 JP 2014083903
(43) Date of publication of application: 21.10.2015
(73) Proprietor: Seiko Epson Corporation, Shinjuku-ku Tokyo (JP)
(72) Inventor: Fujita, Toru, Suwa-shi, Nagano 392-8502 (JP)
(74) Representative: Miller Sturt Kenyon

(56) References cited:
- EP-A1- 1 276 314
- EP-A2- 0 794 657
- US-A1- 2002 051 159
- US-A1- 2004 066 967

## Description

### BACKGROUND

### 1. Technical Field

The present invention relates to a color adjustment method, and a printing pattern for color adjustment.

### 2. Related Art

A printing apparatus is known which feeds out a recording medium which is wound into a roll shape, and carries out printing on the recording medium that is fed out using a recording head (for example, refer to JP-A-2011-156842).

As an output apparatus of an image created by a computer, an image photographed by a digital camera, or the like, the printing apparatus described in JP-A-2011-156842 prints an image by forming dots on a recording medium. Generally, in such a printing apparatus, halftoning is performed using a halftone process, and printing is subsequently carried out on the recording medium.

However, in such a printing apparatus, even with the same apparatus configuration, there are individual differences between printing apparatuses, and there is variation in printed objects. In other words, there is a problem in that even when the same data (image) is output by each device, the brightness and the saturation of the ink on the recording medium differs for each device.

US 2004/066967 discloses that, in a method for generating a color match between a target object having a plurality of different target color values and a source object, a target color space with target color locations to be correlated with target color values is generated for the target object. For the source object, a source color space having a plurality of source color locations is generated, wherein the source color locations are correlated with a source color value, respectively. For each target color location a position in the vicinity of a similar source color location is determined within the source color space. The spacing of this position from the similar source color location is determined, and, based on the spacing, the source color value correlated with the similar source color location is changed.

EP 1 276 314 discloses that, to translate a physical color to a color space of a printer device, a color patch is scanned using a printer's internal scanner. The printer then automatically prints that scanned color, together with a range of variations of that color, on the print media on which printing is to occur. A user may quickly and easily select a color match from the range of colors printed, by visual inspection. The user enters the selected color into the printer, using for example a number or position code, or by marking the selected color on the print media, which is then re-scanned by the printer. Thus, an iterative prior art manual procedure of color modification using color data determined by spectrophotometers is avoided.

US 2002/051159 discloses a color reproduction characteristic correction method which seeks to readily correct a color reproduction characteristic with great accuracy. A color chart, of which dot percentage is different from that of a color chart involved in creation of a printing profile, and which is not many in the number of color patches, is outputted by both a printing machine and a proofer. Color measurement values of the color charts thus obtained are compared with one another to correct the printing profile.

### SUMMARY

An advantage of some aspects of the invention is that it provides a color adjustment method capable of easily performing color adjustment between a first printing apparatus and a second printing apparatus.

This object is achieved by the invention as defined in claim 1. Optional details and further application examples are defined in dependent claims 2-6.

Accordingly, even when there are individual differences between the first printing apparatus and the second printing apparatus, it is possible to determine the second pattern in which the degree of shading is the same as or similar to that of the first pattern from the second pattern group. It is also possible to render the degree of shading of the printed objects printed by the first printing apparatus and the second printing apparatus the same or similar by adjusting the number of the second dots based on the comparison results.

Also, the invention further includes second printing in which a third pattern group including a reference pattern formed of a plurality of third dots having different sizes from each other and a modified pattern, the third dots of which differ in at least one of size and number, using the reference pattern as a reference, are printed by a second printing apparatus, and a fourth pattern which is formed of a plurality of fourth dots having different sizes from each other is printed by the first printing apparatus, and second comparing in which the third pattern group is compared with the fourth pattern, and from the third pattern group, a single pattern with as small as possible a difference in the degree of shading from the fourth pattern is determined.

Accordingly, even when printing a pattern in which dots having different sizes are mixed, it is possible to render the degree of shading of the printed objects printed by the first printing apparatus and the second printing apparatus the same or similar.

### BRIEF DESCRIPTION OF THE DRAWINGS

Embodiments of the invention will now be described by way of example only with reference to the accompanying drawings, wherein like numbers reference like elements.
Fig. 1 is a schematic profile diagram illustrating a printing apparatus used in a color adjustment method of the invention.
Figs. 2A to 2C are diagrams for explaining a first printing step of the color adjustment method of the invention, Fig. 2A is a diagram illustrating a first pattern group, Fig. 2B illustrates a first pattern that serves as a reference, and Fig. 2C is a diagram illustrating a second pattern group.
Figs. 3A and 3B are diagrams for explaining a first comparison step of the color adjustment method of the invention.
Figs. 4A and 4B are diagrams for explaining a second printing step of the color adjustment method of the invention, Fig. 4A is a diagram illustrating a third pattern, and Fig. 4B is a diagram illustrating a fourth pattern.
Figs. 5A and 5B are diagrams for explaining a second comparison step of the color adjustment method of the invention.

### DESCRIPTION OF EXEMPLARY EMBODIMENTS

Hereinafter, detailed description is given based on a favorable embodiment of the color adjustment method of the invention illustrated in the attached drawings.

### First Embodiment

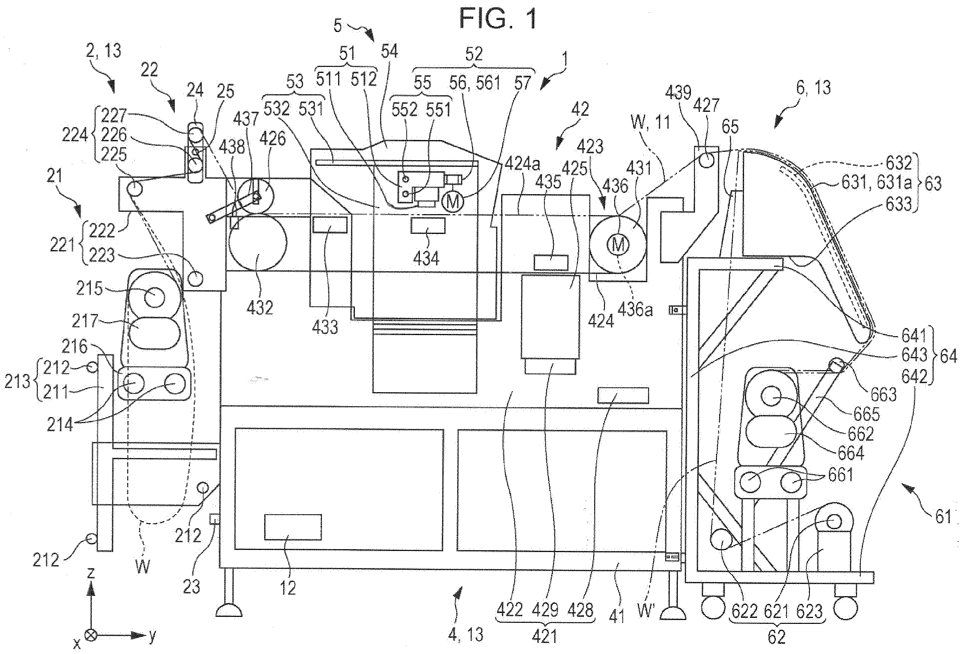

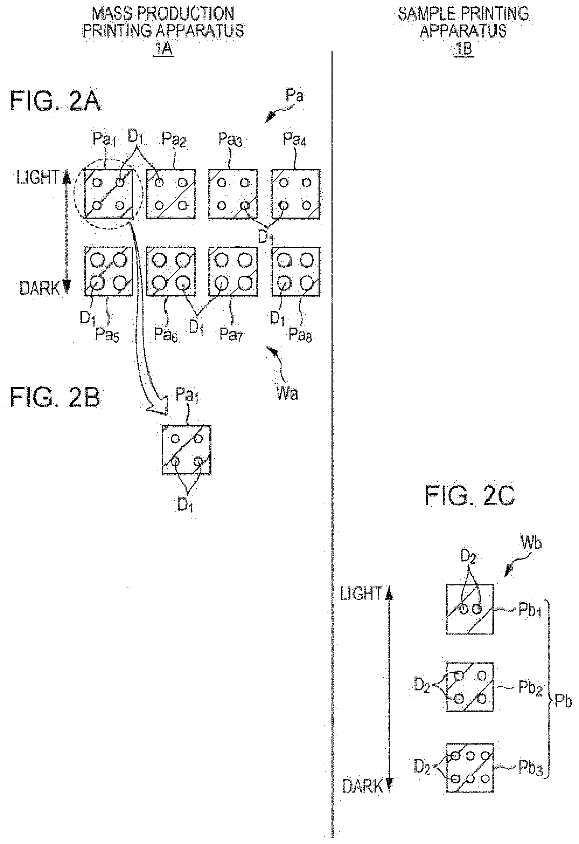

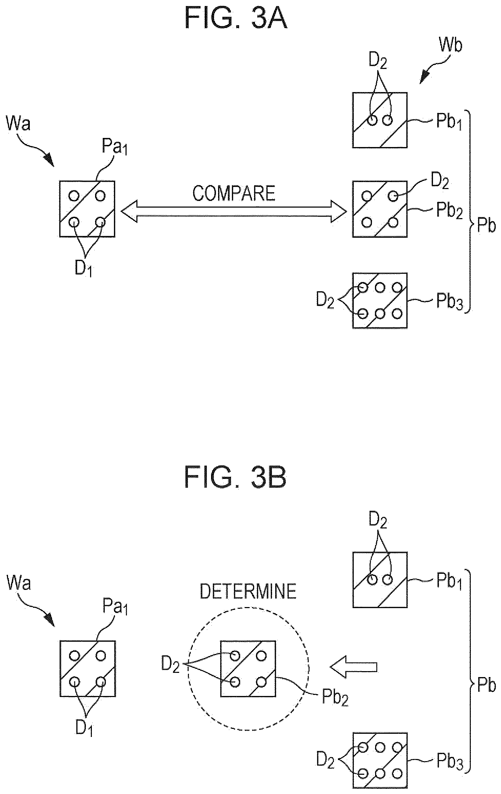

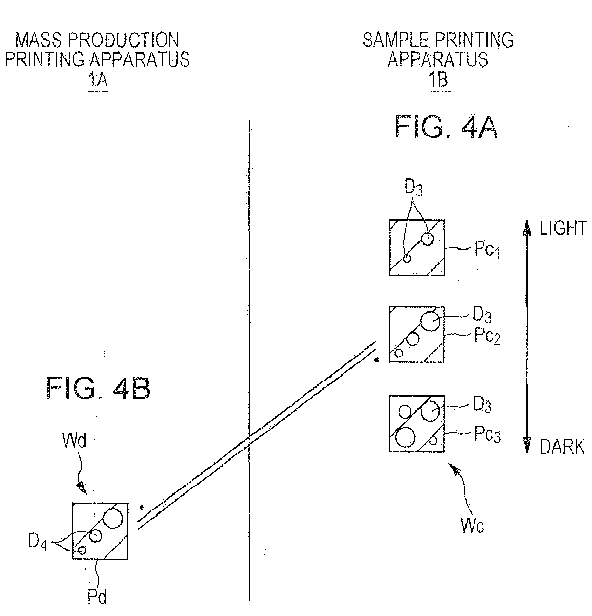

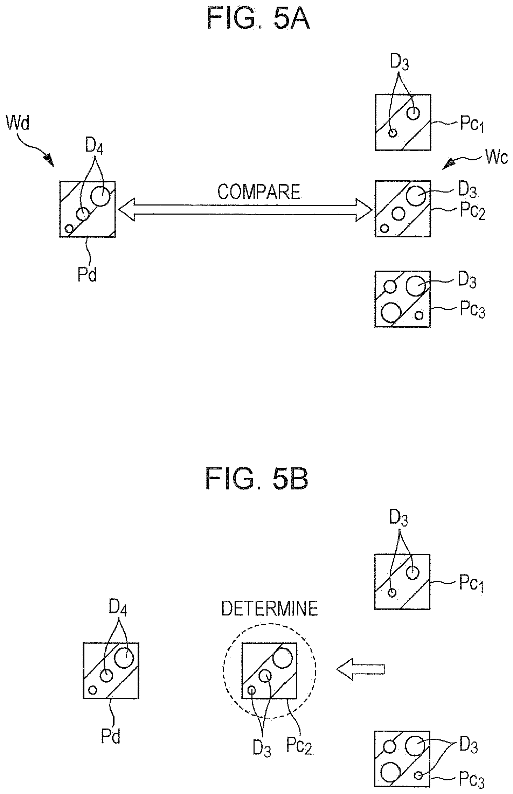

Fig. 1 is a schematic profile diagram illustrating a printing apparatus used in a color adjustment method of the invention. Figs. 2A to 2C are diagrams for explaining a first printing step of the color adjustment method of the invention, Fig. 2A is a diagram illustrating a first pattern group, Fig. 2B illustrates a first pattern that serves as a reference, and Fig. 2C is a diagram illustrating a second pattern group. Figs. 3A and 3B are diagrams for explaining a first comparison step of the color adjustment method of the invention. Figs. 4A and 4B are diagrams for explaining a second printing step of the color adjustment method of the invention, Fig. 4A is a diagram illustrating a third pattern, and Fig. 4B is a diagram illustrating a fourth pattern. Figs. 5A and 5B are diagrams for explaining a second comparison step of the color adjustment method of the invention.

Note that, hereinafter, to facilitate explanation, the direction toward the page in Fig. 1 will be referred to as the "x axis direction", the left-right direction as the "y axis direction", and the up-down direction as the "z axis direction".

Before describing the color adjustment method of the invention, description will be given of a printing apparatus 1 used in the color adjustment method of the invention.

The printing apparatus 1 illustrated in Fig. 1 prints (performs textile printing) a pattern or the like onto a fabric (raw fabric) that is removed and supplied in a so-called reel-to-reel format using a special dye ink in an ink jet method. Note that, in the printing apparatus 1, a direction (a horizontal direction) in which a recording medium (printing medium) W, which is a fabric, is transported is the y axis direction, a direction orthogonal to the y axis direction is the x axis direction, and a vertical direction is the z axis direction.

The printing apparatus 1 is provided with a feed section 2, an apparatus main body 4, a printing mechanism unit (recording unit) 5, a winding section 6, and a control unit 12. The feed section 2 feeds out the recording medium W that is wound into a roll shape, the apparatus main body 4 conveys the recording medium W that is fed out along a conveying path 11 for the printing, the printing mechanism unit 5 is disposed on top of the apparatus main body 4 and performs the printing onto the recording medium W using the ink jet method in cooperation with the apparatus main body 4, the winding section 6 winds and collects the recording medium W that is printed on by the printing mechanism unit 5 at the downstream side in the conveying direction of the apparatus main body 4, and the control unit 12 controls the operations of the components. In the printing apparatus 1, a transport mechanism unit (transport unit) 13 which transports the recording medium W, which is long in shape, along the longitudinal direction thereof, that is, along the y axial direction is configured by the feed section 2, the apparatus main body 4, and the winding section 6.

The apparatus main body 4 includes a main body base 41, which is configured by assembling steel, and a medium conveying mechanism 42 which is supported by the main body base 41 and intermittently conveys the recording medium W in the y axis direction using belt transportation.

The printing mechanism unit 5 includes a carriage unit 51 and a head movement mechanism 52. The carriage unit 51 includes an ink jet head 511, and the head movement mechanism 52 causes the carriage unit 51 to move reciprocally in the x axis direction.

The feed section 2 includes a feed unit 21 which feeds out the recording medium W, and a slack taking unit 22 which picks up the recording medium W that is fed out.

The winding section 6 includes a winding unit 61, an interleaf unit 62, and a heater unit 63, and is configured by mounting these to a winding section base 64. The winding unit 61 winds the recording medium W, the interleaf unit supplies an interleaf W' to the winding unit 61, and, before the recording medium W is wound, the heater unit 63 vaporizes the solvent (water content) of a dye ink that is soaked into the recording medium W.

The slack of the recording medium W (the fabric) that is fed out from the feed unit 21 is taken by subjecting the recording medium W to tension using the slack taking unit 22, and the recording medium is conveyed into the medium conveying mechanism 42. The recording medium W that is conveyed into the medium conveying mechanism 42 is subjected to belt transportation such that the surface of the recording medium W is adhered to the belt. In the belt transportation, while the recording medium W is intermittently conveyed in the y axis direction (a sub-scan), in synchronization with this, the carriage unit 51 moves reciprocally in the x axis direction and discharging of ink from the ink jet head 511 is carried out (a main scan).

In this manner, after the printing is carried out, the portion of the recording medium W in which printing is completed (a textile printing completed portion) is conveyed out from the medium conveying mechanism 42 to the winding section 6. In the winding section 6, the interleaf W' is supplied continually from the interleaf unit 62 to the recording medium W that is conveyed out from the medium conveying mechanism 42, and the recording medium W and the interleaf W' are conveyed to the heater unit 63 in an overlapping state. In the heater unit 63, the recording medium W is heated together with the interleaf W', and the solvent (the water component) of the dye ink is vaporized. In this manner, the recording medium W that is subjected to the drying process and on which the textile printing is completed is wound together with the interleaf W' by the winding unit 61.

The feed unit 21 includes a feed frame 213, two feed-side rod bases 214, and a pair of feed shaft protrusions (a convey-out roll) 215. The feed frame 213 is formed of a pair of T-shaped frames 211 that are fixed to the main body base 41 described above, one on the left and one on the right (in the x axis direction), and a plurality of rod-shaped frames 212 that are provided across the space between the pair of T-shaped frames 211. The two feed-side rod bases 214 are supported by the pair of T-shaped frames 211 to slide freely in the x axis direction and extend in the x axis direction. The pair of feed shaft protrusions 215 are supported by the two feed-side rod bases 214 to slide freely. The distal end portion of each of the feed shaft protrusions 215 is formed in a conical shape, and the pair of feed shaft protrusions 215 horizontally support the recording medium W by fitting both the distal end portions thereof into the feed core of the recording medium W by laterally bringing the pair of feed shaft protrusions 215 closer to each other to correspond to the width of the recording medium W. The recording medium W is conveyed out toward the medium conveying mechanism 42 (a transport belt 424) side in this supported state.

The pair of feed shaft protrusions 215 are configured to move integrally left and right (the width direction of the recording medium W) via the two feed-side rod bases 214 due to a motor-driven lateral movement unit 216.

A motor-driven rotating unit 217 is built into one of the pair of feed shaft protrusions 215, the rotating unit 217 causes the pair of feed shaft protrusions 215 to feed out and rotate, and the recording medium W is fed out. A reflection type light sensor 23 which detects the presence or absence of the recording medium W that is fed out from the feed unit 21 is provided below the feed unit 21.

In the present embodiment, a configuration is adopted in which there is a tension mode in which the recording medium W is fed out while being subjected to a fixed tension, and a slack mode in which the recording medium W is fed out with as little tension as possible, and the mode is switched for different recording media W. It is possible to switch between the tension mode and the slack mode using buttons in a graphical user interface (GUI) in an operation screen (not shown) that is provided on the printing mechanism unit 5.

The tension mode is targeted at an ordinary fabric with low elasticity (the recording medium W), and in this case, the control unit 12 which is formed of a personal computer, for example, controls the rotating unit 217 to apply the necessary tension to the recording medium W and feed out the recording medium W toward a first roller 225. More specifically, using torque control of the motor of the rotating unit 217, the control unit 12 drives the rotating unit 217 to feed out the recording medium W when a conveying operation of the recording medium W is carried out by the medium conveying mechanism 42, and drives the rotating unit 217 to wind the recording medium W back a little when conveying of the recording medium W is stopped by the medium conveying mechanism 42. Accordingly, the recording medium W is conveyed in a state in which tension is applied to the recording medium W between the feed unit 21 and the slack taking unit 22.

Meanwhile, the slack mode is targeted at a fabric with high elasticity (the recording medium W) such as stockings fabric, for example, and in this case, the control unit 12 controls the rotating unit 217 such that the recording medium W that is fed out is temporarily slack so as to hang downward and is subsequently conveyed into the slack taking unit 22 (the slack portion of the recording medium W is indicated by the dashed line in Fig. 1). In other words, when the slack amount of the recording medium W is reduced as the conveying operation of the recording medium W is performed by the medium conveying mechanism 42 and the light sensor 23 that is provided below the feed unit 21 detects that the recording medium W is "absent", the control unit 12 causes the rotating unit 217 to rotate forward so as to feed out the recording medium W, the slack amount increases as a result, and when the light sensor 23 detects that the recording medium W is "present", the control unit 12 causes the driving of the rotating unit 217 to stop. According to the slack amount control, the recording medium W is conveyed in a state in which the recording medium W has an appropriate degree of slack between the feed unit 21 and the slack taking unit 22.

The slack taking unit 22 includes a slack taking frame 221 and a roller group 224. The slack taking frame 221 is formed of a pair of L-shaped frames 222 that are fixed to side frames 422 of the medium conveying mechanism 42, one on the left and one on the right (in the x axis direction), and a rod frame 223 that is provided across the space between the pair of L-shaped frames 222. The roller group 224 is supported by both the pair of L-shaped frames 222 holding the roller group 224 in a free-rotating manner. In the roller group 224, a first roller 225, a second roller 226, and a third roller 227 are disposed in order from the upstream side in the conveying direction in order to introduce, at a plurality of locations, bends to the conveying path 11 of the recording medium W that is conveyed from the feed unit 21, and the roller group 224 is formed of these rollers, each of which has a high friction coefficient.

The recording medium W that is fed out from the feed unit 21 passes through a U-turn at the first roller 225 and reaches the second roller 226 and the third roller 227. The second roller 226 and the third roller 227 are disposed to be vertically proximal, and are supported to rotate freely by a pair of bearing portions 24, the end portions of which are formed integrally. The bearing portions 24 are supported to rotate freely by the respective L-shaped frames 222, and an angle adjustment unit 25 is provided on one of the bearing portions 24. The angle adjustment unit 25 adjusts the angle of the vertical disposition of the second roller 226 and the third roller 227.

The recording medium W that passes the second roller 226 and the third roller 227 changes path in an "S" shape; however, a configuration may be adopted in which the "S" curve is adjusted by deformation corresponding to different types of the recording medium W, and an appropriate degree of tension can be applied for different recording media W. Accordingly, partial slack and wrinkles of the recording medium W are removed, and the recording medium W is conveyed into the medium conveying mechanism 42. Note that, it is preferable that the first roller 225, the second roller 226, and the third roller 227 are convex shaped such that the component of the force acts on the recording medium W from the center toward the outside.

The medium conveying mechanism 42 is provided with a main body frame 421, a belt transportation unit 423, and a belt cleaning unit 425. The main body frame 421 includes the pair of side frames 422 mounted on and fixed to the main body base 41, one on the left and one on the right (in the x axis direction). The belt transportation unit 423 includes an endless transport belt (an endless belt) 424 that is supported by the pair of side frames 422. The belt cleaning unit 425 is disposed on the bottom side of the belt transportation unit 423. The medium conveying mechanism 42 is provided with a pressing roller 426, and a separation roller 427. The pressing roller 426 is provided on the upstream side of the medium conveying mechanism 42 to face the belt transportation unit 423 from above, and the separation roller 427 is provided on the downstream side of the medium conveying mechanism 42 to be disposed obliquely above the belt transportation unit 423.

The main body frame 421 includes the pair of side frames 422 that are formed of thick plate material, and a pair of connecting frames 428, which connect the pair of side frames 422. The main body frame 421 is mounted on and fixed to the main body base 41 by the portions of the pair of side frames 422. The main body frame 421 includes a support frame 429 which is positioned between the pair of connecting frames 428 and connects the pair of side frames 422, and also supports the belt cleaning unit 425 described above. A notch portion for attaching the belt transportation unit 423 and a notch portion for attaching the printing mechanism unit 5 are provided in each of the side frames 422 as necessary, and an opening portion for inspecting the belt cleaning unit 425 is also formed in each of the side frames 422.

The belt transportation unit 423 includes a drive pulley 431, a driven pulley 432, and an endless transport belt 424. The drive pulley 431 is positioned on the downstream side in the conveying direction, the driven pulley 432 is positioned on the upstream side in the conveying direction, and the endless transport belt 424 is provided to span across the drive pulley 431 and the driven pulley 432. The belt transportation unit 423 includes a first guide plate 433, a second guide plate 434, and a third guide plate 435. The first guide plate 433 is positioned in the proximity of the driven pulley 432 and guides the travel of the transport belt 424, the second guide plate 434 is positioned directly beneath the printing mechanism unit 5 and guides the travel of the transport belt 424, and the third guide plate 435 is positioned directly above the support frame 429 and guides the travel of the transport belt 424 which has been routed to the rear side.

The first guide plate 433 and the second guide plate 434 are provided to span across the pair of side frames 422 in a state of being disposed such that the surfaces of the first guide plate 433 and the second guide plate 434 are flush with each other (on the same horizontal plane), and also function as part of the main body frame 421. The first guide plate 433 guides the (top side) transport belt 424 directly after the transport belt 424 separates from the driven pulley 432 such that the transport belt 424 travels horizontally, and the second guide plate 434 guides the transport belt 424 such that slack is not generated on the top side of the transport belt 424 that is positioned in the printing region. Therefore, the transport belt 424 that is positioned directly above the second guide plate 434 functions as a platen. The third guide plate 435 guides the transport belt 424, which receives an upward-pushing force from the belt cleaning unit 425, so as to retain the transport belt 424. Note that, the (bottom side) transport belt 424 travels horizontally directly after separating from the drive pulley 431. In other words, the transport belt 424 travels horizontally in a position that is cleaned by the belt cleaning unit 425.

The drive pulley 431 and the driven pulley 432 are supported by the pair of side frames 422 via special bearings to rotate freely, and a transport motor (a motor) 436 which causes the transport belt 424 to travel intermittently is connected to one shaft end of the drive pulley 431.

An encoder 436a is built into the transport motor 436. It is possible to reliably convey the transport belt 424 intermittently by adjusting the rotation amount which is detected by the encoder 436a. It is also possible to reliably detect that the recording medium W is being transported based on the detected rotation amount, that is, based on whether or not the transport motor 436 is rotating.

The transport belt 424 is formed of a wide special belt, the outer circumferential surface (a fixing portion) 424a, that is, the surface of the side opposing the recording medium W of which is adhesive (adhesive treated), and the outer circumferential surface 424a serves as a fixing portion which fixes the middle of the recording medium W in the longitudinal direction. The recording medium W assumes a state of being adhesively fixed to the outer circumferential surface 424a (the fixing portion), and is transported by the driving of the transport belt 424 in the fixed state. Accordingly, the recording medium W is subjected to recording by ink being discharged thereon from the printing mechanism unit 5 while being intermittently conveyed directly underneath the printing mechanism unit 5 without lifting up or the like.

The pressing roller 426 which adheres the recording medium W that is conveyed therein from the slack taking unit 22 to the transport belt 424 is disposed on the top side of the driven pulley 432. The pressing roller 426 is provided to rotate freely on the distal end portions of a pair of support arms 437 which are supported to rotate freely by the side frames 422. The pressing roller 426 has a predetermined elasticity and a dead weight, and the pressing roller 426 presses the recording medium W into the transport belt 424 directly above the driven pulley 432 using the dead weight. In other words, the pressing roller 426 and the driven pulley 432 interpose the transport belt 424 and function as nip rollers, and continuously adhere the recording medium W to the transport belt 424 that is traveling. Note that, an air cylinder 438 for rotationally moving the support arm 437 is connected to a center position of each of the support arms 437, and the pressing roller 426 is separated from the transport belt 424 by the synchronized driving of the pair of air cylinders 438.

Meanwhile, the separation roller 427 which peels the recording medium W from the transport belt 424 after printing and conveys the recording medium W into the winding section 6 is disposed obliquely above the drive pulley 431. The separation roller 427 is supported to rotate freely by a pair of sub-frames 439 which extend from the side frames 422. In this case, the separation roller 427 peels the recording medium W from the transport belt 424, which circumducts the drive pulley 431 and is routed to the rear side, in a relative manner; however, in actual operation, peeling force from the transport belt 424 differs for different types of the recording medium W. Therefore, depending on the type of the recording medium W, there is a recording medium W which begins to peel at the start of the circumduction of the transport belt 424, and a recording medium W which begins to peel at a position after the circumduction has proceeded by a certain degree. However, there is a concern that when the peeling point is routed to the rear side, the recording medium W will be wound into the transport belt 424.

Therefore, in the present embodiment, the angle of the recording medium W which is conveyed from the transport belt 424 to the separation roller 427 is subjected to position detection, the winding unit 61 is driven to wind based on the detection results of the position detection, and the peeling point is prevented from being routed to the rear side of the transport belt 424.

Since the adhesive transport belt 424 adheres paper scraps and dust with the passage of time, the transport belt 424 is subjected to a periodical cleaning by the belt cleaning unit 425. The belt cleaning unit 425 is supported by the support frame 429 at the bottom side of the transport belt 424, and extends in the x axis direction so as to cross the transport belt 424. Note that, the cleaning liquid which remains on the transport belt 424 finally is wiped off by a waste cloth.

The printing mechanism unit 5 includes a printer frame 53, the head movement mechanism 52, the carriage unit 51, and a printer cover 54. The printer frame 53 extends in the x axis direction to straddle the conveying path 11 (the belt transportation unit 423), the head movement mechanism 52 is supported by the printer frame 53, the carriage unit 51 is mounted on the head movement mechanism 52 and moves reciprocally in the x axis direction, and the printer cover 54 covers the aforementioned components. While not particularly shown, a cap unit which protects the ink jet head 511 and a cleaning unit are mounted on the printing mechanism unit 5. Note that, in the printing mechanism unit 5, since there is variation in the thickness of a so-called paper gap (a work gap) for the different types of recording medium W, the paper gap is adjusted by raising and lowering the entirety of the printing mechanism unit 5 in relation to the apparatus main body 4 (the medium conveying mechanism 42).

The printer frame 53 includes a bridge-shaped frame 531, and a pair of standing frames 532, and the printer frame 53 is supported by the side frames 422 by the portions of the pair of standing frames 532. The bridge-shaped frame 531 extends in the x axis direction and is made of plate metal, and the pair of standing frames 532 support the bridge-shaped frame 531 at both end portions and are made of plate metal. Note that, the printer cover 54 is attached to the printer frame 53.

The carriage unit 51 includes the ink jet head 511 and a carriage 512. The ink jet head 511 includes a plurality of colors of nozzle rows for color printing, and the carriage 512 holds the ink jet head 511 such that the nozzle surface faces downward. Note that, dye inks of each color supplied to each nozzle row are supplies from a so-called off-carriage ink tank.

The head movement mechanism 52 includes a carriage guide 55, a belt transmission mechanism 56, and a carriage motor 57. The carriage guide 55 supports the carriage unit 51 on one side to slide freely in the x axis direction, the belt transmission mechanism 56 causes the carriage guide 55 to move reciprocally, and the carriage motor 57 drives the belt transmission mechanism 56. The carriage guide 55 is formed of a bottom side main guide 551 and a top side sub-guide 552, and the main guide 551 and the sub-guide 552 are supported at both end portions by the pair of standing frames 532. The belt transmission mechanism 56 includes a timing belt 561, and a portion of the timing belt 561 is fixed to the carriage unit 51 (the carriage 512).

When the timing belt 561 is caused to travel forward or backward by the carriage motor 57, the carriage unit 51 is guided by the carriage guide 55 and moves reciprocally in the x axis direction. The moved position of the carriage guide 55 is detected by a linear encoder, and each color of dye ink is selectively discharged from the ink jet head 511 based on the detection results and the print data. Accordingly, printing (textile printing) to the recording medium W is performed.

The winding section 6 is provided with the winding section base 64, the heater unit 63, the winding unit 61 and the interleaf unit 62. The winding section base 64 is joined to the main body base 41 in the y axis direction to be freely detachable, the heater unit 63 is supported by the top portion of the winding section base 64, and the winding unit 61 and the interleaf unit 62 are supported by the bottom portion of the winding section base 64. For the recording medium W which is subjected to textile printing, there is a system in which a thick recording medium W through which ink does not easily permeate to the rear is wound as it is, and a system in which a thin recording medium W through which ink easily permeates to the rear is layered with an interleaf W' and wound, and the winding section 6 of the present embodiment is designed to be capable of handling either system. Hereinafter, a case in which the latter system is adopted will be explained.

The winding section base 64 includes a top horizontal frame section 641, a bottom horizontal frame section 642, and a vertical frame section 643 to which the top horizontal frame section 641 and the bottom horizontal frame section 642 are both connected. The winding section base 64 is configured by assembling extruded shape aluminum vertically and horizontally. The winding section base 64 is connected to the main body base 41 by a portion of the vertical frame section 643 to be freely detachable.

The heater unit 63 is provided with a radiator plate 631, a heater 632, and a right and left pair of support plates 633. The radiator plate 631 includes an arc-shaped radiation surface 631a, the heater 632 is adhered to the inside of the radiator plate 631, and the right and left pair of support plates 633 are provided, one on each of the right and left end portions of the inside of the radiator plate 631, and are shaped like the trunk of an elephant. The heater unit 63 (the support plates 633) is attached to the top horizontal frame section 641 by fixing members 65 provided on the right and left of the top horizontal frame section 641 in a state in which the top half portion of the heater unit 63 is mounted on the top horizontal frame section 641. The top end portion of the radiator plate 631 is disposed in the proximity of the separation roller 427 and in a slightly lower position than the separation roller 427. The top end portion of the radiator plate 631 is formed to be bent downward in an arc shape in order to change the path of the interleaf W' that is introduced from below this portion.

The recording medium W which passes the separation roller 427 is caused to overlap the interleaf W' which is conveyed from below the top end portion of the radiator plate 631, is guided by the arc-shaped outer surface (the radiation surface 631a) of the radiator plate 631 and is conveyed downward. The recording medium W and the interleaf W' which are conveyed in the vertical direction while sliding on the radiation surface 631a are continually heated by the heater 632. The solvent (the water component) of the dye ink that is soaked into the recording medium W is vaporized, and the dye is fixed to the fabric.

The interleaf unit 62 includes an interleaf roller 621, and a guide bar 622. The interleaf roller 621 feeds out the roll-shaped interleaf W', and the guide bar 622 changes the path of the interleaf W' which is fed out toward the top end portion of the radiator plate 631. The guide bar 622 is fixed to a portion of an oblique member which connects the bottom horizontal frame section 642 and the vertical frame section 643. The interleaf roller 621 is supported by the front portion of the bottom horizontal frame section 642 via pair of bearing units 623, embedded in which are movement restriction mechanisms. The interleaf W' is fed out without generating slack due to the pair of bearing units 623.

In the same manner as the feed unit 21 described above, the winding unit 61 includes two winding side rod bases 661, and a pair of winding shaft protrusions 662. The two winding side rod bases 661 are supported by the front and rear middle portions of the bottom horizontal frame section 642 and extend in the x axis direction, and the pair of winding shaft protrusions 662 are supported to slide freely by the two winding side rod bases 661. The winding unit 61 includes a tension roller 663 which is positioned in the conveying path 11 between the bottom end portion of the radiator plate 631 and the pair of winding shaft protrusions 662, and applies tension to the recording medium W and the interleaf W'.

The distal end portion of each of the feed shaft protrusions 662 is formed in a conical shape, and the pair of winding shaft protrusions 662 horizontally support the recording medium W by fitting both the distal end portions thereof into the winding core which winds the recording medium W by laterally bringing the pair of winding shaft protrusions 662 closer to each other to correspond to the width of the recording medium W. A motor-driven rotating unit 664 is built into one of the pair of winding shaft protrusions 662, the pair of winding shaft protrusions 662 are caused to wind and rotate, and the recording medium W and the interleaf W' are wound. As described previously, in the proximity of the separation roller 427, the rotating unit 664 is controlled based on angle detection of the recording medium W which is conveyed to the separation roller 427.

The tension roller 663 is supported to rotate freely on the distal end portions of the pair of rotating arms 665 which are supported by the rear portion of the bottom horizontal frame section 642 to rotate freely. The tension roller 663 makes rotational contact with the interleaf W' side of the recording medium W and the interleaf W' which are wound by the winding core, and the dead weight of the tension roller 663 biases the recording medium W and the interleaf W' downward. Accordingly, the appropriate degree of tension is applied to the recording medium W and the interleaf W', and the recording medium W and the interleaf W' are wound onto the winding core so as to be wound tightly.

When the print data is printed on the recording medium W by the printing apparatus 1, generally, printing is carried out using the printing apparatus 1 for mass production (hereinafter referred to as the "mass production printing apparatus 1A") and the printing apparatus 1 for samples (hereinafter referred to as the "sample printing apparatus 1B").

For example, when printing the print data which is created by a computer or the like, the print data is printed onto a recording medium Wb by the sample printing apparatus 1B, and it is ascertained whether or not the hue, the brightness, and the saturation match those on the screen of the personal computer. When matching is confirmed, printing is carried out on a recording medium Wa using the mass production printing apparatus 1A under the same conditions (for example, dot size, drying conditions, and the like).

However, there is a case in which, in particular, the brightness and the saturation of the colors differ between the recording medium Wb which is printed on by the sample printing apparatus 1B, and the recording medium Wa which is printed on by the mass production printing apparatus 1A. This is caused by the fact that, regardless of the fact that the dot size is set the same on each apparatus, the actual size can be different (hereinafter, generally referred to as the "individual differences" between the mass production printing apparatus 1A and the sample printing apparatus 1B). Therefore, the color adjustment method of the invention is effective for solving this issue.

Note that, in the present specification, the "brightness" and the "saturation" will be referred to together as the "degree of shading", and the "color difference" will be referred to as the "difference in the degree of shading".

In Figs. 2A to 5B, the shading of the color is represented by the dot size, and the size of the hue angle is represented by the coarseness of the hatching. In Figs. 2A to 5B, in order to facilitate understanding, the number of dots in each pattern is reduced to extremely few.

Hereinafter, description will be given of the color adjustment method of the invention.

The color adjustment method of the invention includes a first printing step, a first comparing step, a second printing step, and a second comparing step.

### [1] First Printing Step

### (1-1)

As illustrated in Fig. 2A, a first pattern group Pa is printed on the recording medium Wa by the mass production printing apparatus 1A. In the first pattern group Pa, first patterns Pa₁, Pa₂, Pa₃, Pa₄, Pa₅, Pa₆, Pa₇, and Pa₈, which are provided in different positions from each other, form a matrix of two rows and four columns. The first patterns Pa₁ to Pa₄ are lined up in order from the left side in Fig. 2A, and the first patterns Pa₅ to Pa₈ are lined up in order from the left side in Fig. 2A along the row of the first patterns Pa₁ to Pa₄.

The first patterns Pa₁ to Pa₄ are respectively formed of four first dots D₁ of the same size as each other. In the first patterns Pa₁ to Pa₄, the hue of each of the first dots D₁ differs, and the hue angle increases toward the right side in Fig. 2A.

The first patterns Pa₅ to Pa₈ are respectively formed of four first dots D₁ which are the same size as each other, and are of a larger size than the first dots D₁ in the first patterns Pa₁ to Pa₄. In the first patterns Pa₅ to Pa₈, similarly, the hue is different from each other, and the hue angle increases toward the right side in Fig. 2A.

The first pattern Pa₅ has the same hue as the first pattern Pa₁ and is darker than the first pattern Pa₁. The first pattern Pa₆ has the same hue as the first pattern Pa₂ and is darker than the first pattern Pa₂. The first pattern Pa₇ has the same hue as the first pattern Pa₃ and is darker than the first pattern Pa₃. The first pattern Pa₈ has the same hue as the first pattern Pa₄ and is darker than the first pattern Pa₄.

### (1-2)

When the first pattern group Pa is printed, the second pattern group Pb corresponding to the first patterns Pa₁ to Pa₈ is printed on the recording medium Wb by the sample printing apparatus 1B. Note that, hereinafter, representative description will be given of a second pattern group Pb corresponding to the first pattern Pa₁.

As illustrated in Fig. 2C, the second pattern group Pb includes second patterns Pb₁, Pb₂, and Pb₃ which are formed of second dots D₂ which are (intended to be) the same size as the first dots D₁ of the first pattern Pa₁, and treated as the same color.

Of these, the second pattern Pb₂ is formed of the same number of second dots D₂ as that of the first dots D₁ in the first pattern Pa₁ (four in the illustrated configuration).

The number of the second dots D₂ in the second pattern Pb₁ (two in the illustrated configuration) is less than the number of the second dots D₂ in the second pattern Pb₂. In other words, the second pattern Pb₁ is a lighter color than the second pattern Pb₂.

The number of the second dots D₂ in the second pattern Pb₃ (six in the illustrated configuration) is more than the number of the second dots D₂ in the second pattern Pb₂. In other words, the second pattern Pb₃ is a darker color than the second pattern Pb₂.

In this manner, in the second pattern group Pb, the second patterns Pb₁, Pb₂, and Pb₃ are lined up based on the degree of shading.

### [2] First Comparing Step

Next, as illustrated in Fig. 3A, the first pattern Pa₁ will be compared with each of the second patterns Pb₁ to Pb₃. In the present embodiment, this comparison is performed by measurement using a colorimeter.

As a result of comparing the first pattern Pa₁ with each of the second patterns Pb₁ to Pb₃, the degree of shading of the first pattern Pa₁ and, in this example, the degree of shading of the second pattern Pb₂ match. In other examples, the degree of shading of the second pattern Pb₁ or Pb₃ could match instead. Accordingly, when it is desirable to print a pattern of the same degree of shading as the first pattern Pa₁ using the sample printing apparatus 1B, it is possible to obtain information (first color information) indicating that the second pattern Pb₂ in this example may be printed using the sample printing apparatus 1B (refer to Fig. 3B). When the same print data is printed using the mass production printing apparatus 1A and the sample printing apparatus 1B by performing the printing using the sample printing apparatus 1B based on the information, it is possible to render the degree of shading of the printed objects thereof the same or similar (hereinafter, this will be referred to as "color adjustment").

It is preferable to perform the first printing step and the first comparing step for each size of the first dots D₁ and for each hue of the first dots D₁. Accordingly, it is possible to perform the color adjustment even when there are individual differences between the printing apparatuses corresponding to the size and the hue of the first dots. In other words, it is possible to perform the color adjustment according to the size and degree of brightness or darkness of the hue of the first dots D₁ by subjecting each of the first patterns Pa₁ to Pa₈ to the first printing step and the first comparing step.

It is possible to precisely perform the color adjustment by carrying out the following steps.

### [3] Second Printing Step

### (3-1)

Next, as illustrated in Fig. 4A, a third pattern Pc₂ which is treated as having the same degree of shading as the second pattern Pb₂ that is determined in the first comparing step is printed onto the recording medium Wc by the sample printing apparatus 1B as a reference pattern.

The third pattern Pc₂ is formed of a plurality of third dots D₃ which are the same color as the second dots D₂ and are have different sizes from each other. In the illustrated configuration, the number of the third dots D₃ of the third pattern Pc₂ is one each of large, medium, and small dots.

Next, a third pattern Pc₁ and a third pattern Pc₃ are printed in different positions from the third pattern Pc₂ on the recording medium Wc as modified patterns. The third dots D₃ of the third pattern Pc₁ and the third pattern Pc₃ differ in size and number from those in the third pattern Pc₂. The third pattern Pc₁ is lighter in color than the third pattern Pc₂, and in the illustrated configuration, has one each of the medium and small dots D₃. The third pattern Pc₃ is darker in color than the third pattern Pc₂, and has two large and one each of the medium and small dots D₃.

Note that, in the recording medium Wc, the third patterns Pc₁ to Pc₃ are lined up in order of the degree of shading of the color.

### (3-2)

Next, as illustrated in Fig. 4B, a fourth pattern Pd formed of a plurality of fourth dots D₄ is printed onto the recording medium Wd under the same conditions as the third dots D₃ of the third pattern Pc₂ by the mass production printing apparatus 1A. In other words, the fourth pattern Pd formed of the plurality of fourth dots D₄, which are of the same number and the same hue as the third dots D₃ of the third pattern Pc₂, is printed onto the recording medium Wd by the mass production printing apparatus 1A. In the illustrated configuration, the number of the fourth dots D₄ is one each of large, medium, and small dots.

### [4] Second Comparing Step

As illustrated in Fig. 5A, the third patterns Pc₁ to Pc₃ will be compared with the fourth pattern Pd.

As a result, as illustrated in Fig. 5B, the degree of shading of the third pattern Pc₂ matches the fourth pattern Pd, in this example, although another third pattern Pc₁ or Pc₃ might match in other examples. Accordingly, when it is desirable to print a pattern of the same degree of shading as the fourth pattern Pd using the sample printing apparatus 1B, it is possible to obtain information (second color information) indicating that the third pattern Pc₂ may be printed using the sample printing apparatus 1B. It is possible to perform the color adjustment using a pattern in which dots having different sizes from each other are mixed by performing the printing using the sample printing apparatus 1B based on the information. Accordingly, it is possible to ignore, as much as possible, the individual differences between the apparatuses, and it is possible to precisely perform the color adjustment.

According to the above description, when it is desirable to obtain the first pattern Pa₁ illustrated in Fig. 2B using the mass production printing apparatus 1A, if the third pattern Pc₂ is printed using the sample printing apparatus 1B, it is possible to ignore, as much as possible, the individual differences between the apparatuses.

Here, in the first comparing step, for example, when the degree of shading of the first pattern Pa₁ is between the second pattern Pb₂ and the second pattern Pb₃, it is possible to determine the second pattern (the first color information) which matches the first pattern Pa₁ using the following two methods.

An example of the first method is a method in which, when the degree of shading of the first pattern Pa₁ is closer to the second pattern group Pb₃ than the second pattern Pb₂, the second pattern Pb₃ is treated as the first pattern Pa₁. Accordingly, even when none of the patterns in the second pattern group Pb match the first pattern Pa₁, it is possible to determine the second pattern that serves as the first pattern Pa₁ by selecting the pattern which is as close to being the same as the first pattern Pa₁ as possible.

Note that, as described above, when the pattern that is as close to having the same degree of shading as the first pattern Pa₁ as possible is selected, it is anticipated that there will be a case in which the second pattern Pb₂ and the second pattern Pb₃ are selected. In this case, an example of the second method is a method in which the median value of the second pattern Pb₂ and the second pattern Pb₃ is treated as the first pattern Pa₁. For example, the median value of the number of the second dots D₂ of the second pattern Pb₂ and the number of the second dots D₂ of the second pattern Pb₃ is calculated, and the calculation result is used as the number of the first dots D₁ of the first pattern Pa₁.

According to this method, even if there are two patterns which are as close to the first pattern Pa₁ as possible in the second pattern group Pb, it is possible to determine the patterns that serves as the first pattern Pa₁.

The two methods described above are also valid when determining second information in the second comparing step.

It is preferable to subject each of the first patterns Pa₂ to Pa₈ to the first printing step, the first comparing step, the second printing step, and the second comparing step which are described above. Accordingly, it is possible to perform the color adjustment of the sample printing apparatus 1B for each size of the first dots D₁ and for each color of the first dots D₁. When printing a pattern in which the dots having different sizes from each other are mixed, it is possible to perform the color adjustment of the sample printing apparatus 1B.

According to the color adjustment method of the invention, it is possible to perform the color adjustment of the apparatuses after the halftone process that is performed before performing the printing.

Above, description is given of an embodiment illustrating the color adjustment method of the invention; however, the invention is not limited thereto.

Note that, the first pattern group is formed of eight first patterns; however, the invention is not limited thereto, and there may be seven or less or nine or more.

Three patterns are printed in relation to one first pattern in the second pattern group; however, the invention is not limited thereto, and there may be two, or, four or more.

It is preferable that a second pattern group is printed for each first pattern, the second pattern groups are lined up, and that a matrix shape is formed overall.

Each pattern group is either shaped in the form of a matrix or a column; however, the invention is not limited thereto, and any mode of disposition may be adopted.

In the embodiment, the mass production printing apparatus and the sample printing apparatus are of the same configuration; however, the invention is not limited thereto, and apparatus configurations which are different from each other may be adopted. Even in this case, it is possible to perform the color adjustment according to the color adjustment method of the invention.

In the first printing step, the second pattern is printed by the sample printing apparatus after the first pattern is printed by the mass production printing apparatus; however, the invention is not limited thereto, and a configuration may be adopted in which the first pattern is printed by the mass production printing apparatus after the second pattern in printed by the sample printing apparatus, and the printing of the respective patterns may also be performed at the same time. The printing apparatuses in the second printing step may be swapped as well or instead.

In the embodiment, the first comparing step and the second comparing step are performed using the colorimeter; however, the invention is not limited thereto, and the comparison may be carried out by visual recognition.

The foregoing description has been given by way of example only and it will be appreciated by a person skilled in the art that modifications can be made without departing from the scope of the present invention.

## Claims

1. A color adjustment method, comprising:
first printing in which a first color adjustment pattern (Pa₁) formed of a plurality of first dots (D₁) of the same size is printed by a first printing apparatus (1A) such that an overall brightness and saturation of the first color adjustment pattern are affected by the size and number of the first dots (D₁) and a plurality of second color adjustment patterns (Pb₁₋Pb₃) which are formed of second dots (D₂) of a same color as the first dots and which differ from each other in number of the second dots are printed by a second printing apparatus (1B) such that an overall brightness and saturation of each of the second color adjustment patterns (Pb₁₋Pb₃) are affected by the size and number of the second dots (D₂); and
first comparing in which the first color adjustment pattern is compared with the plurality of second color adjustment patterns, and from the plurality of second color adjustment patterns, the second color adjustment pattern with as small as possible a difference in the overall brightness and saturation from the first color adjustment pattern is selected, and first information is determined based on the second color adjustment pattern, the first information indicating that the second color adjustment pattern selected in said first comparing may be printed using the second printing apparatus (1B) when it is desired to print, using the second printing apparatus (1B), a pattern of the same overall brightness and saturation as the first color adjustment pattern (Pa₁), and further comprising:
second printing in which a third color adjustment pattern group (Pc₁-Pc3) including a reference color adjustment pattern formed of a plurality of third dots (D₃) having different sizes from each other, such that an overall brightness and saturation of the reference color adjustment pattern are affected by the size and number of the third dots (D₃), and a modified color adjustment pattern, the third dots of which differ in at least one of size and number, such that an overall brightness and saturation of the modified color adjustment pattern are affected by the size and number of its third dots, using the reference color adjustment pattern as a reference, are printed by the second printing apparatus (1B), and a fourth color adjustment pattern (Pd) which is formed of a plurality of fourth dots (D₄) having different sizes from each other is printed by the first printing apparatus (1A) such that an overall brightness and saturation of the fourth color adjustment pattern (Pd) are affected by the size and number of the fourth dots (D₄); and
second comparing in which the third color adjustment pattern group is compared with the fourth color adjustment pattern, and from the third color adjustment pattern group, a single color adjustment pattern (Pc₂) with as small as possible a difference in the degree of overall brightness and saturation from the fourth color adjustment pattern is determined, and obtaining second information indicating that the single color adjustment pattern (Pc₂) determined from the third color adjustment group may be printed using the second printing apparatus (1B) when it is desired to print, using the second printing apparatus (1B), a pattern of the same overall brightness and saturation as the fourth color adjustment pattern (Pd).

2. The color adjustment method according to Claim 1,
wherein, when, of the plurality of second color adjustment patterns, there are two second color adjustment patterns with as small as possible a difference in the overall brightness and saturation from the first color adjustment pattern in the comparing, a median value of the number of the second dots of the two second color adjustment patterns is set as the first information.

3. The color adjustment method according to Claim 1 or Claim 2,
wherein the color adjustment method is performed for a plurality of colors of the first dots.

4. The color adjustment method according to Claim 3,
wherein the first color adjustment patterns are arranged in a matrix on a single printing medium based on a hue angle.

5. The color adjustment method according to any one of the preceding claims, wherein the color adjustment method is performed for a plurality of sizes of the first dots.

6. The color adjustment method according to Claim 5,
wherein the first color adjustment patterns are arranged in a matrix on a single printing medium based on a size relationship of the first dots.

## Patentansprüche

1. Farbanpassungsverfahren, umfassend:
erstes Drucken, wobei ein erstes Farbanpassungsmuster (Pa₁), das aus mehreren ersten Punkten (D₁) derselben Größe gebildet ist, durch eine erste Druckvorrichtung (1A) gedruckt wird, sodass eine Gesamthelligkeit und Sättigung des ersten Farbanpassungsmusters durch die Größe und Anzahl der ersten Punkte (D₁) beeinflusst sind, und mehrere zweite Farbanpassungsmuster (Pb₁-Pb₃), die aus zweiten Punkten (D₂) einer selben Farbe wie die ersten Punkte gebildet sind und die sich in Anzahl der zweiten Punkte voneinander unterscheiden, durch eine zweite Druckvorrichtung (1B) gedruckt werden, sodass eine Gesamthelligkeit und Sättigung jedes der zweiten Farbanpassungsmuster (Pb₁-Pb₃) durch die Größe und Anzahl der zweiten Punkte (D₂) beeinflusst sind;
erstes Vergleichen, wobei das erste Farbanpassungsmuster mit den mehreren zweiten Farbanpassungsmustern verglichen wird und aus den mehreren zweiten Farbanpassungsmustern das zweite Farbanpassungsmuster mit einem möglichst kleinen Unterschied in der Gesamthelligkeit und Sättigung zu dem ersten Farbanpassungsmuster ausgewählt wird und erste Informationen basierend auf dem zweiten Farbanpassungsmuster bestimmt werden, wobei die ersten Informationen angeben, dass das zweite Farbanpassungsmuster, das in dem ersten Vergleich ausgewählt wird, unter Verwendung der zweiten Druckvorrichtung (1B) gedruckt werden kann, wenn erwünscht ist, unter Verwendung der zweiten Druckvorrichtung (1B) ein Muster derselben Gesamthelligkeit und Sättigung wie das erste Farbanpassungsmuster (Pa₁) zu drucken, und weiter umfassend:
zweites Drucken, wobei eine dritte Farbanpassungsmustergruppe (Pc₁-Pc₃), die ein Referenzfarbanpassungsmuster enthält, das aus mehreren dritten Punkten (D₃) mit voneinander unterschiedlichen Größen gebildet ist, sodass eine Gesamthelligkeit und Sättigung des Referenzfarbanpassungsmusters durch die Größe und Anzahl der dritten Punkte (D₃) beeinflusst sind, und ein modifiziertes Farbanpassungsmuster, dessen dritte Punkte sich in mindestens einem von Größe und Anzahl unterscheiden, sodass eine Gesamthelligkeit und Sättigung des modifizierten Farbanpassungsmusters durch die Größe und Anzahl seiner dritten Punkte beeinflusst sind, unter Verwendung des Referenzfarbanpassungsmusters als Referenz durch die zweite Druckvorrichtung (1B) gedruckt werden, und ein viertes Farbanpassungsmuster (Pd), das aus mehreren vierten Punkten (D₄) mit voneinander unterschiedlichen Größen gebildet ist, durch die erste Druckvorrichtung (1A) gedruckt wird, sodass eine Gesamthelligkeit und Sättigung des vierten Farbanpassungsmusters (Pd) durch die Größe und Anzahl der vierten Punkte (D₄) beeinflusst sind; und
zweites Vergleichen, wobei die dritte Farbanpassungsmustergruppe mit dem vierten Farbanpassungsmuster verglichen wird und aus der dritten Farbanpassungsmustergruppe ein einzelnes Farbanpassungsmuster (Pc₂) mit einem möglichst kleinen Unterschied in dem Grad an Gesamthelligkeit und Sättigung zu dem vierten Farbanpassungsmuster bestimmt wird und zweite Informationen erhalten werden, die angeben, dass das einzelne Farbanpassungsmuster (Pc₂), das aus der dritten einzelnen Farbanpassungsmustergruppe bestimmt wird, unter Verwendung der zweiten Druckvorrichtung (1B) gedruckt werden kann, wenn erwünscht ist, unter Verwendung der zweiten Druckvorrichtung (1B) ein Muster derselben Gesamthelligkeit und Sättigung wie das vierte Farbanpassungsmuster (Pd) zu drucken.

2. Farbanpassungsverfahren nach Anspruch 1,
wobei, wenn es von den mehreren zweiten Farbanpassungsmustern zwei zweite Farbanpassungsmuster mit einem möglichst kleinen Unterschied in der Gesamthelligkeit und Sättigung zu dem ersten Farbanpassungsmuster in dem Vergleich gibt, ein Medianwert der Anzahl der zweiten Punkte der zwei zweiten Farbanpassungsmuster als die ersten Informationen eingestellt wird.

3. Farbanpassungsverfahren nach Anspruch 1 oder Anspruch 2,
wobei das Farbanpassungsverfahren für mehrere Farben der ersten Punkte durchgeführt wird.

4. Farbanpassungsverfahren nach Anspruch 3,
wobei die ersten Farbanpassungsmuster in einer Matrix auf einem einzelnen Druckmedium basierend auf einem Bunttonwinkel angeordnet sind.

5. Farbanpassungsverfahren nach einem der vorstehenden Ansprüche,
wobei das Farbanpassungsverfahren für mehrere Größen der ersten Punkte durchgeführt wird.

6. Farbanpassungsverfahren nach Anspruch 5,
wobei die ersten Farbanpassungsmuster in einer Matrix auf einem einzelnen Druckmedium basierend auf einem Größenverhältnis der ersten Punkte angeordnet sind.

## Revendications

1. Procédé de réglage de couleur, comprenant :
une première impression où un premier motif de réglage de couleur (Pa₁) formé par une pluralité de premiers points (D₁) de la même taille est imprimé par un premier appareil d'impression (1A), de sorte qu'une luminosité globale et saturation du premier motif de réglage de couleur sont affectées par la taille et le nombre de premiers points (D₁) et une pluralité de deuxièmes motifs de réglage de couleur (Pb₁-Pb₃) formés par des deuxièmes points (D₂) d'une même couleur que les premiers points et qui diffèrent les uns des autres en nombre de deuxièmes points sont imprimés par un deuxième appareil d'impression (1B), de sorte qu'une luminosité globale et saturation de chacun des deuxièmes motifs de réglage de couleur (Pb₁-Pb₃) sont affectées par la taille et le nombre de deuxièmes points (D₂) ; et
une première comparaison où le premier motif de réglage de couleur est comparé avec la pluralité des deuxièmes motifs de réglage de couleur, et à partir de la pluralité des deuxièmes motifs de réglage de couleur, le deuxième motif de réglage de couleur avec une différence la plus faible possible en luminosité globale et saturation par rapport au premier motif de réglage de couleur est sélectionné, et une première information est déterminée sur la base du deuxième motif de réglage de couleur, la première information indiquant que le deuxième motif de réglage de couleur sélectionné lors de ladite première comparaison peut être imprimé en utilisant le deuxième appareil d'impression (1B) lorsque l'on souhaite imprimer, en utilisant le deuxième appareil d'impression (1B), un motif de même luminosité globale et saturation que le premier motif de réglage de couleur (Pa₁) , et comprenant en outre :
une deuxième impression où un groupe de troisièmes motifs de réglage de couleur (Pc₁-Pc₃) incluant un motif de réglage de couleur de référence formé par une pluralité de troisièmes points (D₃) ayant différentes tailles les uns des autres, de sorte qu'une luminosité globale et saturation du motif de réglage de couleur de référence sont affectées par la taille et le nombre de troisièmes points (D₃), et
un motif de réglage de couleur modifié dont les troisièmes points diffèrent concernant au moins l'un(e) parmi la taille et le nombre de sorte qu'une luminosité globale et saturation du motif de réglage de couleur modifié sont affectées par la taille et le nombre de ses troisièmes points, en utilisant le motif de réglage de couleur de référence en tant que référence, sont imprimés par le deuxième appareil d'impression (1B), et un quatrième motif de réglage de couleur (Pd) formé par une pluralité de quatrièmes points (D₄) ayant des tailles différentes les uns des autres est imprimé par le premier appareil d'impression (1A) de sorte qu'une luminosité globale et saturation du quatrième motif de réglage de couleur (Pd) sont affectées par la taille et le nombre des quatrièmes points (D₄) ; et
une deuxième comparaison où le groupe de troisièmes motifs de réglage de couleur est comparé avec le quatrième motif de réglage de couleur, et à partir du groupe de troisièmes motifs de réglage de couleur, un unique motif de réglage de couleur (Pc₂) avec une différence la plus faible possible concernant le degré de luminosité globale et saturation par rapport au quatrième motif de réglage de couleur est déterminé, et l'obtention d'une deuxième information indiquant que l'unique motif de réglage de couleur (Pc₂) déterminé à partir du groupe de troisièmes motifs de réglage de couleur peut être imprimé en utilisant le deuxième appareil d'impression (1B) lorsque l'on souhaite imprimer, en utilisant le deuxième appareil d'impression (1B), un motif de même luminosité globale et saturation que le quatrième motif de réglage de couleur (Pd).

2. Procédé de réglage de couleur selon la revendication 1,
dans lequel, lorsque, parmi la pluralité de deuxièmes motifs de réglage de couleur, il y a deux deuxièmes motifs de réglage de couleur avec une différence la plus faible possible en luminosité globale et saturation par rapport au premier motif de réglage de couleur lors de la comparaison, une valeur médiane du nombre de deuxièmes points des deux deuxièmes motifs de réglage de couleur est définie en tant que la première information.

3. Procédé de réglage de couleur selon la revendication 1 ou la revendication 2,
dans lequel le procédé de réglage de couleur est réalisé pour une pluralité de couleurs des premiers points.

4. Procédé de réglage de couleur selon la revendication 3,
dans lequel les premiers motifs de réglage de couleur sont disposés en une matrice sur un unique support d'impression sur la base d'un angle de teinte.

5. Procédé de réglage de couleur selon l'une quelconque des revendications précédentes,
dans lequel le procédé de réglage de couleur est réalisé pour une pluralité de tailles des premiers points.

6. Procédé de réglage de couleur selon la revendication 5,
dans lequel les premiers motifs de réglage de couleur sont disposés en une matrice sur un unique support d'impression sur la base d'une relation de taille des premiers points.
